# EUROPÄISCHE PATENTANMELDUNG

(11) **EP 3 736 758 A1**
(43) Veröffentlichungstag der Anmeldung: **11.11.2020**
(21) Anmeldenummer: 20173225.2
(22) Anmeldetag: 06.05.2020
(51) Int. Cl.: G06Q 10/10, G06Q 10/00

(54) **VERFAHREN ZUR SCHADENSERFASSUNG BEI EINEM KRAFTFAHRZEUG**

(30) Priorität: 10.05.2019 DE 102019112289
(71) Anmelder: ControlExpert GmbH, 40764 Langenfeld (DE)
(72) Erfinder: Witte, Andreas, 40764 Langenfeld (DE); Witte, Nicolas, 40764 Langenfeld (DE); Schoenen, Sebastian, 40764 Langenfeld (DE)
(74) Vertreter: Michalski Hüttermann & Partner Patentanwälte mbB

(57) **Zusammenfassung**

Die Erfindung betrifft ein Verfahren zur Schadenserfassung bei einem Kraftfahrzeug (1) anhand wenigstens einer Bilddatei (2) des beschädigten Kraftfahrzeuges (1), wobei das Verfahren die folgenden Schritte beinhaltet:
Feststellen, anhand der wenigstens einen Bilddatei (2), für eine Mehrzahl vorbestimmter Fahrzeugzonen (3) des Kraftfahrzeuges (1), ob eine Beschädigung der Fahrzeugzone (3) vorliegt, unter Verwendung einer ersten Datenbank, die Informationen zu den Fahrzeugzonen (3) des Kraftahrzeugs (1) beinhaltet, und eines künstlichen neuronalen Netzwerkes, das auf die Erkennung von Schäden in vorbestimmten Fahrzeugzonen (3) von Kraftfahrzeugen (1) trainiert ist,
Bestimmen einer Schadensstärke (5) für die Fahrzeugzonen (3), für die eine Beschädigung festgestellt worden ist, anhand der Bilddatei (2) und unter Verwendung der ersten Datenbank und des künstlichen neuronalen Netzwerkes,
Ermitteln eines Beschädigungsgrades für jedes einzelne Fahrzeugteil (6) innerhalb jeder beschädigten Fahrzeugzone (4) anhand der Schadensstärke (5) der beschädigten Fahrzeugzone (4), mittels einer zweiten Datenbank, die jedes in der beschädigten Fahrzeugzone (4) vorhandene Fahrzeugteil (6) sowie dessen Beschädigungsgrad als Funktion der Schadensstärke (5) der beschädigten Fahrzeugzone (4) widergibt,
Entscheiden für jedes beschädigte Fahrzeugteil (6), ob eine Instandsetzung des Fahrzeugteiles (6) durchgeführt werden kann oder eine Erneuerung des Fahrzeugteiles (6) notwendig ist, anhand des Beschädigungsgrades des Fahrzeugteiles (6) und mittels einer dritten Datenbank, die das Resultat dieser Entscheidung als Funktion des Beschädigungsgrades des Fahrzeugteils beinhaltet. Auf diese Weise wird ein Verfahren zur Abwicklung der Schadenserfassung bei einem Kraftfahrzeug (1), anhand wenigstens einer Bilddatei (2) des beschädigten Kraftfahrzeugs (1), bereitgestellt, das präzise ist und schnell und effektiv durchgeführt werden kann.

## Beschreibung

Die Erfindung betrifft ein Verfahren zur Schadenserfassung bei einem Kraftfahrzeug anhand einer Bilddatei des beschädigten Kraftfahrzeugs.

Mit steigendem Verkehrsaufkommen kommt es auch immer häufiger zu Verkehrsunfällen. Nach einem Verkehrsunfall ist es zunächst notwendig, festzustellen auf welche Summe sich der Unfallschaden beläuft, bevor der entstandene Schaden mit der Versicherung des Unfallverursachers abgewickelt werden kann. Unter technischen Aspekten bedeutet dies, dass ermittelt werden muss, welche Teile des Kraftfahrzeugs beschädigt sind und damit einer Reparatur oder eines Austauschs bedürfen.

Zur Ermittlung des Unfallschadens wird oft ein Kraftfahrzeug-Sachverständiger (Kfz-Sachverständiger) bestellt, der das Fahrzeug bzw. die Fahrzeuge inspiziert, um den Unfallschaden abschätzen zu können. Dieser Kfz-Sachverständige kann ein Gutachten verfassen, anhand dessen die aufkommende Versicherung den Schaden an dem Unfallwagen bzw. an den Unfallwägen erkennen und damit beziffern kann und anhand dessen der Geschädigte aufzeigen kann, welchen Schaden sein Fahrzeug hat.

Allerdings ist das Bestellen eines Kfz-Sachverständigen mit großem Zeitaufwand für alle beteiligten Parteien verbunden und die Zeitdauer der Abwicklung des Schadens mit der aufkommenden Versicherung kann oft bei mehreren Wochen liegen. Es kommt außerdem nicht selten vor, dass die Versicherung des Unfallverursachers bzw. des Geschädigten verschiedene Kfz-Gutachten einholen, die einander widersprechen, sodass es zu einem langatmigen Rechtsstreit kommen kann.

Davon ausgehend ist es die Aufgabe der Erfindung, ein Verfahren zur Schadenserfassung bei einem Kraftfahrzeug bereitzustellen, das präzise ist und schnell, effektiv und wiederholbar durchgeführt werden kann.

Diese Aufgabe wird durch den Gegenstand des Patentanspruchs 1 gelöst. Bevorzugte Weiterbildungen finden sich in den Unteransprüchen.

Erfindungsgemäß ist ein Verfahren zur Schadenserfassung bei einem Kraftfahrzeug anhand einer Bilddatei des beschädigten Kraftfahrzeuges vorgesehen, wobei das Verfahren die folgenden Schritte beinhaltet:
Feststellen, anhand der Bilddatei, für eine Mehrzahl vorbestimmter Fahrzeugzonen des Kraftfahrzeuges, ob eine Beschädigung der Fahrzeugzone vorliegt, unter Verwendung einer ersten Datenbank, die Informationen zu den Fahrzeugzonen des Kraftahrzeugs beinhaltet, und eines künstlichen neuronalen Netzwerkes, das auf die Erkennung von Schäden in vorbestimmten Fahrzeugzonen von Kraftfahrzeugen trainiert ist,
Bestimmen einer Schadensstärke für die Fahrzeugzonen, für die eine Beschädigung festgestellt worden ist, anhand der Bilddatei und unter Verwendung der ersten Datenbank und des künstlichen neuronalen Netzwerkes,
Ermitteln eines Beschädigungsgrades für jedes einzelne Fahrzeugteil innerhalb jeder beschädigten Fahrzeugzone anhand der Schadensstärke der beschädigten Fahrzeugzone, mittels einer zweiten Datenbank, die in der Fahrzeugzone vorhandene Fahrzeugteile sowie deren Beschädigungsgrad als Funktion der Schadensstärke der Fahrzeugzone beinhaltet,
Entscheiden für jedes beschädigte Fahrzeugteil, ob eine Instandsetzung des Fahrzeugteiles durchgeführt werden kann oder eine Erneuerung des Fahrzeugteiles notwendig ist, anhand des Beschädigungsgrades des Fahrzeugteiles mittels einer dritten Datenbank, die das Resultat dieser Entscheidung als Funktion des Beschädigungsgrades des Fahrzeugteils beinhaltet.

Durch das erfindungsgemäße Verfahren wird eine präzise Erfassung des Schadens ermöglicht, die ohne die aufwändige Anreise eine Kfz- Sachverständigen erfolgen kann und somit mit einem wesentlich geringeren Zeitaufwand verbunden ist. Darüber hinaus hat das erfindungsgemäße Verfahren den Vorteil, dass die Erfassung des Schadens des Kraftfahrzeuges nicht im Ermessen des Gutachters liegt, sondern der Schaden objektiv ermittelt wird. Wenn vorliegend von "Schaden des Kraftfahrzeuges" bzw. von "Unfallschaden" gesprochen wird, ist damit unter technischen Aspekten gemeint, welche Teile des Kraftfahrzeugs durch den Unfall beschädigt worden sind und in welchem Ausmaß.

Diese Erfassung des Schadens wird insbesondere durch die Definition der Fahrzeugzonen ermöglicht, die die Komplexität der Schadenserfassung deutlich reduziert, da ein Kraftfahrzeug aus mehreren Tausend Einzelteilen besteht. In dem erfindungsgemäßen Verfahren wird jedoch nicht direkt die Beschädigung jedes dieser Einzelteile, sondern zuerst die Schadensstärke der einzelnen Fahrzeugzonen ermittelt. Mittels dieser Schadensstärke kann dann die Beschädigung jedes einzelnen Fahrzeugteils ermittelt werden. Somit bedeutet das erfindungsgemäße Verfahren einen wesentlich geringeren Aufwand als ein anderes denkbares automatisiertes Verfahren, bei dem der Schaden der einzelnen Fahrzeugteile direkt mittels eines künstlichen neuronalen Netzwerkes erfasst werden würde.

Grundsätzlich kann die Schadenserfassung anhand einer beliebigen Zahl von Fahrzeugzonen erfolgen. Gemäß einer Weiterbildung der Erfindung werden allerdings zwischen 20 und 100 Fahrzeugzonen verwendet, besonders bevorzugt zwischen 25 und 60, ganz besonders bevorzugt zwischen 30 und 50.

Gemäß einer bevorzugten Weiterbildung der Erfindung ist es außerdem vorgesehen, dass das künstliche neuronale Netzwerk Deep Learning-Technologie verwendet. Es sei jedoch darauf hingewiesen, dass das erfindungsgemäße Verfahren nicht auf die Verwendung eines künstlichen neuronalen Netzwerkes beschränkt ist, das Deep Learning-Technologie verwendet.

Grundsätzlich kann mittels des Verfahrens lediglich eine Ermittlung des Schadens des Kraftfahrzeuges erstellt werden. Gemäß einer bevorzugten Weiterbildung der Erfindung ist jedoch ein Verfahren vorgesehen, das die folgenden weiteren Schritte beinhaltet:
Bestimmen der für die Erneuerung der zu erneuernden Fahrzeugteile notwendigen Ersatzteile mittels einer vierten Datenbank, die eine Auflistung der Ersatzteile für jedes Fahrzeugteil und der mit Instandsetzung oder Erneuerung jedes Fahrzeugteiles verbundenen Reparaturschritte sowie vorzugsweise auch deren Kosten beinhaltet, und
Bestimmen der für die Instandsetzung oder Erneuerung der beschädigten Fahrzeugteile notwendigen Arbeitsschritte und Ersatzteile mittels der vierten Datenbank.

Mittels dieser Weiterbildung erfolgt zusätzlich zur Ermittlung des Schadens eine Ermittlung der notwendigen Reparaturschritte sowie Ersatzteile sowie ggf. auch der damit verbundenen Kosten.

Gemäß einer weiteren bevorzugten Weiterbildung der Erfindung ist außerdem vorgesehen, dass das Verfahren die folgenden weiteren Schritte beinhaltet:
Ermitteln der mit jedem notwendigen Ersatzteil und jedem notwendigen Arbeitsschritt verbundenen Kosten mittels der vierten Datenbank und
Ermitteln der gesamten Reparaturkosten durch Summieren der ermittelten Kosten der notwendigen Arbeitsschritte und Ersatzteile.

Mittels dieser Weiterbildung erfolgt zusätzlich zu der Ermittlung der notwendigen Reparaturschritte sowie Ersatzteile eine vollständige Ermittlung des Unfallschadens, anhand der die Summe der Reparaturkosten abgeschätzt werden kann.

Grundsätzlich kann die vierte Datenbank auf mehreren Datenquellen basieren. Gemäß einer bevorzugten Weiterbildung der Erfindung ist allerdings vorgesehen, dass die vierte Datenbank auf einem statischen Modell beruht, das auf historischen Daten basiert. Gemäß einer zusätzlichen oder alternativen bevorzugten Weiterbildung der Erfindung ist vorgesehen, dass die vierte Datenbank, zumindest teilweise, auf einem kalkulatorischen Modell basiert, das auf aktuelle Datenbanken zur Ermittlung von Reparatur- und Austauschmethoden zurückgreift.

Grundsätzlich kann die Schadenserfassung unabhängig vom Fahrzeugmodell des beschädigten Kraftfahrzeuges erfolgen. Gemäß einer bevorzugten Weiterbildung der Erfindung ist allerdings vorgesehen, dass das Verfahren zur Schadenserfassung die folgenden weiteren Schritte beinhaltet:
Ermitteln der Fahrzeugidentifikationsnummer des Kraftfahrzeuges,
Bestimmen des Fahrzeugmodells des Kraftfahrzeuges und
Bereitstellen der zweiten Datenbank und/oder der dritten Datenbank und/oder der vierten Datenbank entsprechend dem Fahrzeugmodell des Kraftfahrzeuges.

Gemäß dieser Weiterbildung der Erfindung können die zweite Datenbank, die jedes in der Fahrzeugzone vorhandene Fahrzeugteil sowie dessen Beschädigungsgrad als Funktion der Schadensstärke der Fahrzeugzone widergibt, die dritte Datenbank, die auf diese Entscheidung anhand eines Beschädigungsgrades des Fahrzeugteils spezialisiert ist, und die vierte Datenbank, die auf die Ermittlung notwendiger Ersatzteile und Reparaturschritte sowie deren Kosten abgestimmt ist, gemäß dem beschädigten Fahrzeugmodell bereitgestellt werden, was die Präzision der Schadenserfassung erhöht.

Grundsätzlich kann die Erfassung des Schadens des Kraftfahrzeuges ohne weitere Überprüfung ausgegeben werden. Gemäß einer bevorzugten Weiterbildung der Erfindung ist allerdings vorgesehen, dass die durch das Verfahren zur Schadenserfassung vorgeschlagene Erfassung des Schadens des Kraftfahrzeuges zur Annahme oder Korrektur durch einen Nutzer ausgegeben wird und nach Eingabe einer Annahme bzw. Korrektur durch den Nutzer eine angenommene bzw. korrigierte Erfassung zum weiteren Lernen des künstlichen neuronalen Netzwerkes verwendet wird. Diese Weiterbildung sieht die Möglichkeit vor, dass der Nutzer, insbesondere ein Kfz-Sachverständiger, die vorgeschlagene Erfassung des Schadens prüfen und gegebenenfalls korrigieren kann. Mittels dieser Korrektur kann das künstliche neuronale Netzwerk weitergebildet und es kann zu dessen Lernprozess beigetragen werden, sodass zukünftige Schadenserfassungen akkurater erfolgen können.

Grundsätzlich kann die Bilddatei von einer beliebigen Quelle stammen. So kann die Bilddatei insbesondere händisch oder automatisch von dem Kraftfahrzeug nach dem Unfall aufgenommen worden sein. Gemäß einer bevorzugten Weiterbildung der Erfindung ist allerdings vorgesehen, dass, wenigstens unterstützend, eine durch eine in das beschädigte Kraftfahrzeug und/oder ein anderes in den Unfall verwickeltes Kraftfahrzeug eingebaute Dashcam aufgenommene Bilddateien zur Schadenserfassung verwendet werden.

Grundsätzlich kann die Erfassung des Schadens des Kraftfahrzeuges ohne visuelle Darstellung ausgegeben werden. Gemäß einer bevorzugten Weiterbildung der Erfindung ist allerdings vorgesehen, dass auf einem Bildschirm eine Anzeige der beschädigten Fahrzeugzonen auf einem dreidimensionalen Modell des Kraftfahrzeuges mittels eines Augmented Reality Kits, ARKits, erfolgt. Diese Weiterbildung hat die Funktion, dass der Nutzer den Schaden und dessen einzelnen Komponenten visualisieren kann und somit einen klaren Überblick über den entstandenen Schaden bekommt.

Grundsätzlich kann die Erfassung des Schadens des Kraftfahrzeuges durch ein beliebiges Gerät und mit von einer beliebigen Quelle bereitgestellten Bilddateien erfolgen. Gemäß einer bevorzugten Weiterbildung der Erfindung ist allerdings vorgesehen, dass das Verfahren zur Schadenserfassung im Rahmen einer App erfolgt, die auf einem Smartphone oder Tablet installiert ist oder als Web-Anwendung auf einem Smartphone oder Tablet online ausgeführt werden kann, wobei die Bilddateien zur Schadenserkennung mittels des Smartphones bzw. Tablets aufgenommen und/oder bereitgestellt werden.

Gemäß einer weiteren bevorzugten Weiterbildung der Erfindung ist außerdem vorgesehen, dass die App dem Nutzer Anweisungen zur korrekten Aufnahme der Bilddateien bzw. Bereitstellung der Bilddateien gibt und den Nutzer gegebenenfalls auffordert, weitere Bilddateien aufzunehmen bzw. bereitzustellen. Die Bereitstellung des erfindungsgemäßen Verfahrens im Rahmen einer App hat die Wirkung, dass das erfindungsgemäße Verfahren grundsätzlich jedem Tablet- oder Smartphone- Benutzer zur Verfügung steht. Dies hat den Effekt, dass im Falle eines Unfalls der Geschädigte, sofern er ein Smartphone oder Tablet mit sich führt, direkt vor Ort das erfindungsgemäße Verfahren anwenden kann, um den Unfallschaden zu erfassen. Dies hat den Vorteil, dass die Schadensabwicklung wesentlich schneller und unkomplizierter abläuft, als bei Bestellung eines Kfz-Sachverständigen und einem Geschädigten insbesondere direkt zur Verfügung steht.

Gemäß einer weiteren bevorzugten Weiterbildung der Erfindung ist vorgesehen, dass mittels der App das Auslesen von Meta-Daten des Smartphones oder Tablets, insbesondere des GPS-Signals des Smartphones oder Tablets, erfolgt. Gemäß einer weiteren bevorzugten Weiterbildung der Erfindung ist außerdem vorgesehen, dass innerhalb der App eine Anzeige von Werkstätten und/oder Abschleppunternehmen in der Umgebung sowie deren Kontaktdaten erfolgt. Diese Weiterbildung erlaubt es dem Nutzer, eine Übersicht der naheliegenden Werkstätten und Abschleppunternehmen zu erhalten, sodass dieser direkt entscheiden kann, wo er das beschädigte Kraftfahrzeug reparieren lassen möchte. Dies hat den Vorteil, dass dem Nutzer eine aufwändige Suche nach Werkstätten und/oder Abschleppunternehmen erspart bleibt und dass die Schadensabwicklung somit weiter beschleunigt werden kann.

Grundsätzlich kann die Erfassung des Schadens des Kraftfahrzeuges ohne die Ausgabe weiterer Informationen erfolgen. Gemäß einer bevorzugten Weiterbildung der Erfindung ist allerdings vorgesehen, dass eine Warnung ausgegeben wird, sofern die Schadenserfassung ermittelt hat, dass das Kraftfahrzeug nicht weiter fahrtauglich ist. Die hat die wichtige Funktion, dass vermieden werden kann, dass ein nicht mehr fahrtaugliches Fahrzeug im Straßenverkehr bewegt wird, und den Vorteil, dass eine Gefährdung anderer Straßenverkehrsteilnehmer durch ein nicht mehr fahrtaugliches Fahrzeug ausgeschlossen wird.

Grundsätzlich kann lediglich eine Erfassung des Schadens des Kraftfahrzeuges ohne die Ermittlung des Wiederbeschaffungswertes des Kraftfahrzeuges erfolgen. Gemäß einer bevorzugten Weiterbildung der Erfindung ist allerdings vorgesehen, dass der Wiederbeschaffungswert des Kraftfahrzeuges ermittelt wird und ein Vergleich der Reparaturkosten mit dem Wiederbeschaffungswert erfolgt, sodass der Geschädigte entscheiden kann, sich entweder die Reparaturkosten bzw. die Wiederbeschaffungskosten direkt auszahlen zu lassen oder das Kraftfahrzeug zu einer Werkstatt zu bringen und dort reparieren zu lassen. Dies hat die Funktion, dass der Unfallschaden direkt abgewickelt werden kann, was den Vorteil hat, dass die Schadensabwicklung mit minimalem Aufwand von statten geht.

Nachfolgend wird die Erfindung anhand eines bevorzugten Ausführungsbeispiels unter Bezugnahme auf die Zeichnungen weiter im Detail erläutert.

In der Zeichnung zeigen
- Fig. 1: eine schematische Darstellung der Schritte des erfindungsgemäßen Verfahrens zur Schadenserfassung bei einem Kraftfahrzeug anhand einer Bilddatei des beschädigten Kraftfahrzeugs gemäß einem bevorzugten Ausführungsbeispiel der Erfindung und
- Fig. 2: die Ausgabe der Schadenserfassung gemäß einem bevorzugten Ausführungsbeispiel der Erfindung.

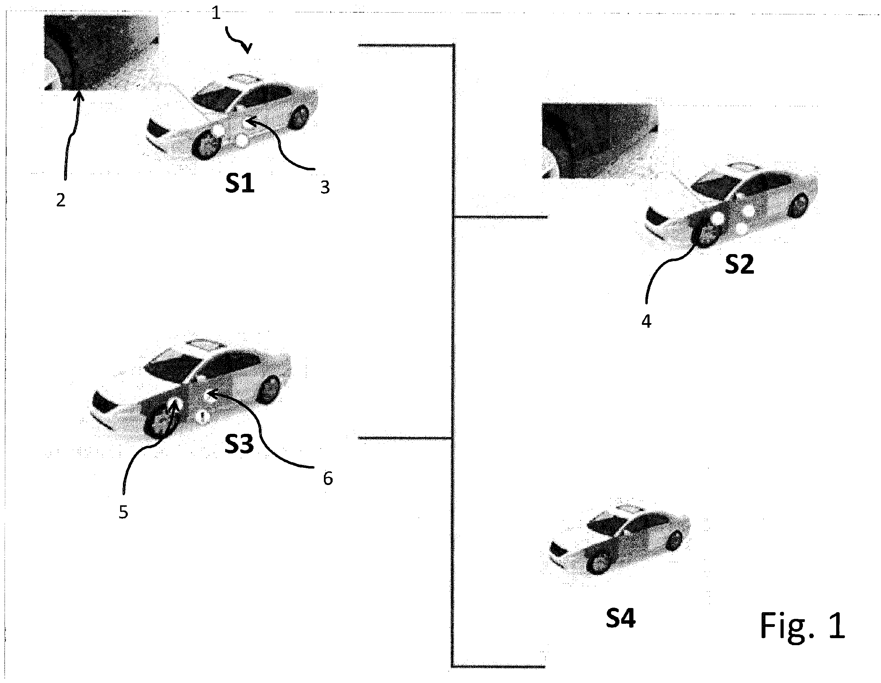

Fig. 1 zeigt schematisch die Schritte des erfindungsgemäßen Verfahrens zur Schadenserfassung bei einem Kraftfahrzeug 1 anhand einer Bilddatei 2 des beschädigten Kraftfahrzeugs 1. Hier wird in einem ersten Verfahrensschritt, S1, anhand der Bilddatei 1, für eine Mehrzahl vorbestimmter Fahrzeugzonen 3 des Kraftfahrzeuges 1 festgestellt, ob eine Beschädigung der jeweiligen Fahrzeugzone 3 vorliegt. Dieser Verfahrensschritt erfolgt unter Verwendung einer ersten Datenbank und eines künstlichen neuronalen Netzwerkes, das auf die Erkennung von Schäden in vorbestimmten Fahrzeugzonen 3 von Kraftfahrzeugen 1 trainiert ist.

In einem zweiten Verfahrensschritt, S2, erfolgt das Bestimmen einer Schadensstärke 5 für die Fahrzeugzonen 3, für die eine Beschädigung festgestellt worden ist, anhand der Bilddatei 2 und unter Verwendung der ersten Datenbank und des künstlichen neuronalen Netzwerkes. Die Schadensstärke 5 wird für anhand der Bilddatei 2 für jede beschädigte Fahrzeugzone 4 bestimmt und kann beispielsweise durch Ausgabe eines numerischen Wertes oder durch eine Einteilung in eine vorgegebene Kategorie erfolgen.

In einem dritten Verfahrensschritt, S3, erfolgt das Ermitteln eines Beschädigungsgrades für jedes einzelne Fahrzeugteil 6 innerhalb jeder beschädigten Fahrzeugzone 4 anhand der Schadensstärke 5 der beschädigten Fahrzeugzone 4, mittels einer zweiten Datenbank, die jedes in der Fahrzeugzone 3 vorhandene Fahrzeugteil 6 sowie dessen Beschädigungsgrad als Funktion der Schadensstärke 5 der Fahrzeugzone 3 widergibt. Dieser Beschädigungsgrad wird anhand der Schadensstärke 5 der beschädigten Fahrzeugzone 4 für jedes sich in der beschädigten Fahrzeugzone 4 befindende Fahrzeugteil 6 ermittelt. Liegt beispielsweise eine Beschädigung einer Fahrzeugzone 3 vor und die Schadensstärke 5 hat einen sehr geringen Wert, so ist es wahrscheinlich, dass lediglich eine Beschädigung der Lackierung des Kraftfahrzeuges 1 vorliegt. Hat die Schadensstärke 5 jedoch einen sehr großen Wert, so ist es wahrscheinlich, dass eine Beschädigung von einer Mehrzahl an Fahrzeugteilen 6 vorliegt und der Beschädigungsgrad der an der Außenseite des Kraftfahrzeugs 1 liegenden Fahrzeugteile 6 einen sehr hohen Wert aufweist.

In einem vierten Verfahrensschritt, S4, erfolgt das Entscheiden für jedes beschädigte Fahrzeugteil 6, ob eine Instandsetzung des Fahrzeugteiles 6 durchgeführt werden kann oder eine Erneuerung des Fahrzeugteiles 6 notwendig ist, anhand des Beschädigungsgrades des Fahrzeugteiles 6 und mittels einer dritten Datenbank, die auf diese Entscheidung anhand eines Beschädigungsgrades des Fahrzeugteils 6 spezialisiert ist. Hat der Beschädigungsgrad eines Fahrzeugteils 6 einen niedrigen Wert, so ist es wahrscheinlich, dass eine Instandsetzung des Fahrzeugteiles 6 durchgeführt werden kann. Hat der Beschädigungsgrad eines Fahrzeugteils 6 jedoch einen hohen Wert, so ist es wahrscheinlich, dass keine Instandsetzung des Fahrzeugteiles 6 durchgeführt werden kann und das Fahrzeugteil 6 erneuert werden muss.

Mittels des Verfahrens gemäß dem vorliegend beschriebenen bevorzugten Ausführungsbeispiel der Erfindung ist es also möglich, für jedes Fahrzeugteil 6 der Kraftfahrzeuges 1 zu bestimmen, ob eine Beschädigung des Fahrzeugteiles 6 vorliegt, und sofern eine Beschädigung vorliegt, ob eine Instandsetzung durchgeführt werden kann oder ob eine Erneuerung des Fahrzeugteils 6 notwendig ist.

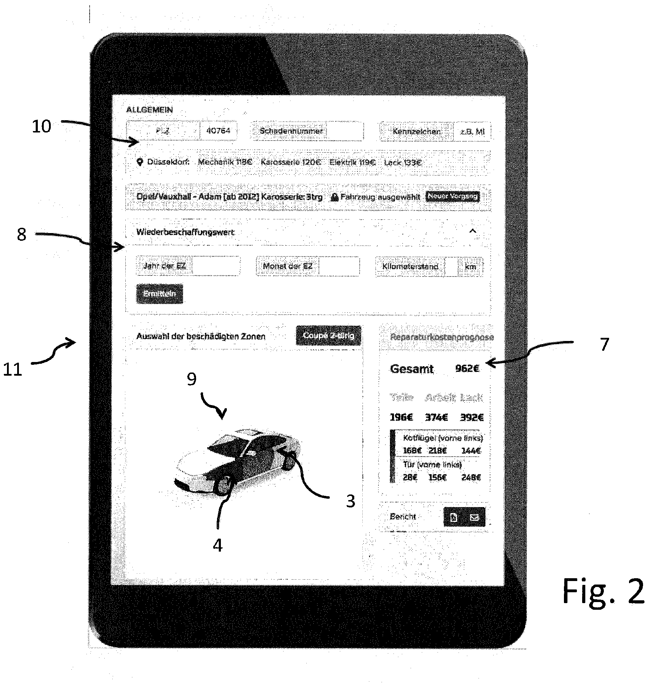

Fig. 2 zeigt die Ausgabe der Schadenserfassung gemäß einer bevorzugten Weiterbildung der Erfindung. Hier erfolgt die Ausgabe der Schadenserfassung auf einem Tablet 11 und im Rahmen einer App 10, wobei auf einem Bildschirm 8 eine Anzeige der beschädigten Fahrzeugzonen 3 auf einem dreidimensionalen Modell des Kraftfahrzeuges 9 mittels eines Augmented Reality Kits, ARKits, erfolgt. Zusätzlich zu der Erfassung des Schadens des Kraftfahrzeuges 1 ist das Bestimmen der für die Instandsetzung oder Erneuerung der beschädigten Fahrzeugteile 6 notwendigen Arbeitsschritte und Ersatzteile sowie das Ermitteln der mit jedem notwendigen Ersatzteil und jedem notwendigen Arbeitsschritt verbundenen Kosten und das Ermitteln der gesamten Reparaturkosten 7, erfolgt. Außerdem ist das Bestimmen des Fahrzeugmodells des Kraftfahrzeuges 1 erfolgt, sodass die zweite Datenbank und/oder der dritte Datenbank und/oder der vierte Datenbank entsprechend dem Fahrzeugmodell des Kraftfahrzeuges 1, vorliegend einem Opel/Vauxhall - Adam ab 2012, Karosserie dreitürig, bereitgestellt worden sind. Eine Bestimmung des Fahrzeugmodells kann über eine automatische Erkennung der Fahrzeug-Identifizierungsnummer (FIN) des Fahrzeugs erfolgen, beispielsweise so, wie in der DE 10 2019 109 941 beschrieben.

Sofern mittels der App 10 das Auslesen des GPS-Signals des Smartphones oder Tablets 11 erfolgt, kann zusätzlich eine Anzeige von Werkstätten und/oder Abschleppunternehmen in der Umgebung sowie deren Kontaktdaten erfolgen. Außerdem kann anhand weiterer manuell eingegebener Daten des Kraftfahrzeuges 1 der Wiederbeschaffungswert des Fahrzeuges ermittelt werden, sodass ein Vergleich der Reparaturkosten 7 mit dem Wiederbeschaffungswert erfolgen kann und der Geschädigte entweder die Möglichkeit hat, sich die Reparaturkosten 7 bzw. die Wiederbeschaffungskosten direkt auszahlen zu lassen, oder das Kraftfahrzeug 1 zu einer Werkstatt zu bringen und der Unfallschaden somit abgewickelt werden kann.

### Bezugszeichenliste

- 1: Kraftfahrzeug
- 2: Bilddatei
- 3: Fahrzeugzone
- 4: beschädigte Fahrzeugzone
- 5: Schadensstärke
- 6: Fahrzeugteil
- 7: Reparaturkosten
- 8: Bildschirm
- 9: dreidimensionales Modell des Kraftfahrzeuges
- 10: App
- 11: Smartphone oder Tablet

## Patentansprüche

1. Verfahren zur Schadenserfassung bei einem Kraftfahrzeug (1) anhand einer Bilddatei (2) des beschädigten Kraftfahrzeuges (1), wobei das Verfahren die folgenden Schritte beinhaltet:
Feststellen, anhand der Bilddatei (2), für eine Mehrzahl vorbestimmter Fahrzeugzonen (3) des Kraftfahrzeuges (1), ob eine Beschädigung der Fahrzeugzone (3) vorliegt, unter Verwendung einer ersten Datenbank, die Informationen zu den Fahrzeugzonen (3) des Kraftahrzeugs (1) beinhaltet, und eines künstlichen neuronalen Netzwerkes, das auf die Erkennung von Schäden in vorbestimmten Fahrzeugzonen (3) von Kraftfahrzeugen (1) trainiert ist,
Bestimmen einer Schadensstärke (5) für die Fahrzeugzonen (3), für die eine Beschädigung festgestellt worden ist, anhand der Bilddatei (2) und unter Verwendung der ersten Datenbank und des künstlichen neuronalen Netzwerkes,
Ermitteln eines Beschädigungsgrades für jedes einzelne Fahrzeugteil (6) innerhalb jeder beschädigten Fahrzeugzone (4) anhand der Schadensstärke (5) der beschädigten Fahrzeugzone (4), mittels einer zweiten Datenbank, die jedes in der beschädigten Fahrzeugzone (4) vorhandene Fahrzeugteil (6) sowie dessen Beschädigungsgrad als Funktion der Schadensstärke (5) der beschädigten Fahrzeugzone (4) widergibt,
Entscheiden für jedes beschädigte Fahrzeugteil (6), ob eine Instandsetzung des Fahrzeugteiles (6) durchgeführt werden kann oder eine Erneuerung des Fahrzeugteiles (6) notwendig ist, anhand des Beschädigungsgrades des Fahrzeugteiles (6) und mittels einer dritten Datenbank, die das Resultat dieser Entscheidung als Funktion des Beschädigungsgrades des Fahrzeugteils beinhaltet.

2. Verfahren zur Schadenserfassung bei einem Kraftfahrzeug (1) gemäß Anspruch 1, das die folgenden weiteren Schritte beinhaltet:
Bestimmen der für die Erneuerung der zu erneuernden Fahrzeugteile (6) notwendigen Ersatzteile mittels einer vierten Datenbank, die eine Auflistung der Ersatzteile für jedes Fahrzeugteil und der mit Instandsetzung oder Erneuerung jedes Fahrzeugteiles verbundenen Reparaturschritte beinhaltet, und
Bestimmen der für die Instandsetzung oder Erneuerung der beschädigten Fahrzeugteile (6) notwendigen Arbeitsschritte und Ersatzteile mittels der vierten Datenbank.

3. Verfahren nach Anspruch 2, das die folgenden weiteren Schritte beinhaltet:
Ermitteln der mit jedem notwendigen Ersatzteil und jedem notwendigen Arbeitsschritt verbundenen Kosten mittels der vierten Datenbank und
Ermitteln der gesamten Reparaturkosten (7) durch Summieren der ermittelten Kosten der notwendigen Arbeitsschritte und Ersatzteile.

4. Verfahren zur Schadenserfassung bei einem Kraftfahrzeug (1) gemäß Anspruch 3, wobei die vierte Datenbank auf einem statischen Modell beruht, das auf historischen Daten basiert.

5. Verfahren zur Schadenserfassung bei einem Kraftfahrzeug (1) gemäß Anspruch 3, wobei die vierte Datenbank auf einem kalkulatorischen Modell basiert, das auf aktuelle Datenbanken zur Ermittlung von Reparatur- und Austauschmethoden zurückgreift.

6. Verfahren zur Schadenserfassung bei einem Kraftfahrzeug (1) gemäß einem der vorhergehenden Ansprüche, das die folgenden weiteren Schritte beinhaltet:
Ermitteln der Fahrzeugidentifikationsnummer des Kraftfahrzeuges,
Bestimmen des Fahrzeugmodells des Kraftfahrzeuges und
Bereitstellen der zweiten Datenbank und/oder der dritten Datenbank und/oder der vierten Datenbank entsprechend dem Fahrzeugmodell des Kraftfahrzeuges.

7. Verfahren zur Schadenserfassung bei einem Kraftfahrzeug (1) gemäß Anspruch 6, wobei der Wiederbeschaffungswert des Fahrzeuges ermittelt wird und ein Vergleich der Reparaturkosten (7) mit einem Wiederbeschaffungswert erfolgt, und der Unfallschaden direkt durch Entscheiden des Geschädigten, sich die Reparaturkosten (7) bzw. die Wiederbeschaffungskosten direkt auszahlen zu lassen, oder das Kraftfahrzeug (1) zu einer Werkstatt zu bringen, abgewickelt werden kann.

8. Verfahren zur Schadenserfassung bei einem Kraftfahrzeug (1) gemäß einem der vorherigen Ansprüche, mit einem weiteren Verfahrensschritt, in dem die durch das Verfahren zur Schadenserfassung vorgeschlagene Erfassung des Schadens des Kraftfahrzeuges (1) zur Annahme oder Korrektur durch einen Nutzer ausgegeben wird und nach Eingabe einer Annahme bzw. Korrektur durch den Nutzer eine angenommene bzw. korrigierte Erfassung zum weiteren Lernen des künstlichen neuronalen Netzwerkes verwendet wird.

9. Verfahren zur Schadenserfassung bei einem Kraftfahrzeug (1) gemäß einem der vorherigen Ansprüche, wobei zusätzlich durch eine in das beschädigte Kraftfahrzeug (1) oder ein anderes in den Unfall verwickeltes Kraftfahrzeug (1) eingebaute Dashcam aufgenommene Bilddateien (2) zur Schadenserfassung verwendet werden.

10. Verfahren zur Schadenserfassung bei einem Kraftfahrzeug (1) gemäß einem der vorherigen Ansprüche, wobei auf einem Bildschirm (8) eine Anzeige der beschädigten Fahrzeugzonen (3) auf einem dreidimensionalen Modell des Kraftfahrzeuges (9) mittels eines Augmented Reality Kits, ARKits, erfolgt.

11. Verfahren zur Schadenserfassung bei einem Kraftfahrzeug (1) gemäß einem der vorherigen Ansprüche, das im Rahmen einer App (10) erfolgt, die auf einem Smartphone oder Tablet (11) installiert ist, wobei die Bilddateien (2) zur Schadenserfassung mittels des Smartphones bzw. Tablets (11) aufgenommen und/oder bereitgestellt werden.

12. Verfahren zur Schadenserfassung bei einem Kraftfahrzeug (1) gemäß Anspruch 11, wobei die App (10) dem Nutzer Anweisungen zur korrekten Aufnahme der Bilddateien (2) bzw. zur korrekten Bereitstellung der Bilddateien (2) gibt und den Nutzer gegebenenfalls auffordert, weitere Bilddateien (2) aufzunehmen bzw. bereitzustellen.

13. Verfahren zur Schadenserfassung bei einem Kraftfahrzeug (1) gemäß Anspruch 11 oder 12, wobei mittels der App (10) das Auslesen von Meta-Daten des Smartphones oder Tablets (11) erfolgt, insbesondere des GPS-Signals des Smartphones oder Tablets (11).

14. Verfahren zur Schadenserfassung bei einem Kraftfahrzeug (1) gemäß Anspruch 13, wobei innerhalb der App (10) eine Anzeige von Werkstätten und/oder Abschleppunternehmen in der Umgebung sowie von deren Kontaktdaten erfolgt.

15. Verfahren zur Schadenserfassung bei einem Kraftfahrzeug (1) gemäß einem der vorherigen Ansprüche, wobei eine Warnung ausgegeben wird, sofern die Schadenserfassung ermittelt hat, dass das Kraftfahrzeug (1) nicht weiter fahrtauglich ist.
